(19) Europäisches Patentamt
European Patent Office
Office européen des brevets

(11) **EP 4 776 736 A1**

(12) **EUROPEAN PATENT APPLICATION**
published in accordance with Art. 153(4) EPC

(43) Date of publication:
**15.07.2026 Bulletin 2026/29**

(21) Application number: **23951225.4**

(22) Date of filing: **08.09.2023**

(51) International Patent Classification (IPC):
*H04W 72/50* *(2023.01)*

(52) Cooperative Patent Classification (CPC):
**H04W 72/50**

(86) International application number:
**PCT/CN2023/117853**

(87) International publication number:
**WO 2025/050406 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **DU, Zhongda
Dongguan, Guangdong 523860 (CN)**

(74) Representative: **RGTH
Patentanwälte PartGmbB
Mönckebergstraße 11
20095 Hamburg (DE)**

(54) **RESOURCE ALLOCATION METHOD AND DEVICE**

(57)    The present application relates to a resource allocation method and a device. The method comprises: on the basis of data rates of a plurality of logical channels, obtaining first parameters corresponding to the plurality of logical channels: and on the basis of the first parameters corresponding to the plurality of logical channels, allocating radio resources to the plurality of logical channels. In embodiments of the present application, the radio resources are allocated between different logical channels on the basis of parameters that are obtained on the basis of the data rates of the logical channels, so that the radio resources can be allocated more rationally.

300

S310

First parameters corresponding to a plurality of logical channels are obtained based on data rates of the plurality of logical channels

S320

Radio resources are allocated to the plurality of logical channels based on the first parameters corresponding to the plurality of logical channels

FIG. 3

**Description**

TECHNICAL FIELD

The present application relates to the field of communications, and more specifically, to a resource allocation method and a device.

BACKGROUND

In a 3rd Generation Partnership Project (3GPP) cellular system, when a User Equipment (UE) is scheduled in an uplink direction, if more than one logical channel is scheduled, resource blocks need to be shared between different logical channels for uplink data transmission. One of the more important parameters is logical channel priority. Radio resources can be allocated to logical channels according to the priority order of the logical channels, but a low-priority logical channel is prone to starvation.

SUMMARY

Embodiments of the present application provide a resource allocation method and a device that enable more reasonable allocation of radio resources between different logical channels.

The embodiments of the present application provide a resource allocation method, which includes:

obtaining first parameters corresponding to a plurality of logical channels based on data rates of the plurality of logical channels; and
allocating radio resources to the plurality of logical channels based on the first parameters corresponding to the plurality of logical channels.

The embodiments of the present application provide a terminal device, which includes:

a processing unit, configured to obtain first parameters corresponding to a plurality of logical channels based on data rates of the plurality of logical channels; and
an allocation unit, configured to allocate radio resources to the plurality of logical channels based on the first parameters corresponding to the plurality of logical channels.

The embodiments of the present application provide a terminal device, which includes: a transceiver, a processor, and a memory. The memory is configured to store a computer program, the transceiver is configured to communicate with other devices, and the processor is configured to call the computer program stored in the memory and run the computer program, to enable the terminal device to perform the resource allocation method mentioned above.

The embodiments of the present application provide a network device, which includes: a transceiver, a processor, and a memory. The memory is configured to store a computer program, the transceiver is configured to communicate with other devices, and the processor is configured to call the computer program stored in the memory and run the computer program, to enable the network device to perform the resource allocation method mentioned above.

The embodiments of the present application provide a chip for implementing the resource allocation method mentioned above.

Specifically, the chip includes: a processor, configured to call a computer program from a memory and run the computer program, to enable a device equipped with the chip to perform the resource allocation method mentioned above.

The embodiments of the present application provide a computer-readable storage medium for storing a computer program which, when executed by a device, enables the device to perform the resource allocation method mentioned above.

The embodiments of the present application provide a computer program product, which includes computer program instructions, where the computer program instructions enable a computer to perform the resource allocation method mentioned above.

The embodiments of the present application provide a computer program, where the computer program, when executed on a computer, enables the computer to perform the resource allocation method mentioned above.

In the embodiments of the present application, the radio resources are allocated between different logical channels based on parameters obtained according to the data rates of the logical channels, so that the radio resources can be allocated more reasonably.

## BRIEF DESCRIPTION OF THE DRAWINGS

FIG. 1 is a schematic diagram of an application scenario according to the embodiments of the present application.

FIG. 2 is a schematic diagram of participation of logical channels in a logical channel prioritization (LCP) process according to the present application.

FIG. 3 is a schematic flowchart of a resource allocation method according to an embodiment of the present application.

FIG. 4 is a schematic flowchart of a resource allocation method according to another embodiment of the present application.

FIG. 5 is a schematic flowchart of a resource allocation method according to another embodiment of the present application.

FIG. 6 is a schematic flowchart of a resource allocation method according to another embodiment of the present application.

FIG. 7 is a schematic flowchart of a resource allocation method according to another embodiment of the present application.

FIGS. 8A and 8B are schematic diagrams of a satisfaction curve and a curvature curve of the present application.

FIG. 9 is a schematic block diagram of a terminal device according to an embodiment of the present application.

FIG. 10 is a schematic block diagram of a terminal device according to another embodiment of the present application.

FIG. 11 is a schematic block diagram of a communication device according to an embodiment of the present application.

FIG. 12 is a schematic block diagram of a chip according to an embodiment of the present application.

FIG. 13 is a schematic block diagram of a communication system according to an embodiment of the present application.

## DETAILED DESCRIPTION

Technical solutions in the embodiments of the present application will be described below in conjunction with accompanying drawings in the embodiments of the present application.

The technical solutions in the embodiments of the present application may be applied to various communication systems, such as: a Long Term Evolution (LTE) system, an Advanced Long Term Evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial Networks (NTN) system, a Universal Mobile Telecommunication System, a Wireless Local Area Network (WLAN), Wireless Fidelity (WiFi), a 5th-Generation (5G) communication system, or other communication systems.

Generally speaking, conventional communication systems support a limited number of connections and are relatively easy to implement. However, with the development of communication technologies, mobile communication systems support not only the conventional communications but also communications such as Device to Device (D2D) communication, Machine to Machine (M2M) communication, Machine Type Communication (MTC), Vehicle to Vehicle (V2V) communication, or Vehicle to everything (V2X) communication. The embodiments of the present application may also be applied to such communication systems.

In an implementation, the communication system in the embodiments of the present application may be applied to a Carrier Aggregation (CA) scenario, a Dual Connectivity (DC) scenario, or a Standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a User Equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, which may be a cellular phone, a cordless phone, a Session Initiation Protocol (SIP) phone, a Wireless Local Loop (WLL) station, a Personal Digital Assistant (PDA) device, a handheld device with wireless communication functions, a computing device or other process devices connected to a wireless modem, a vehicle-mounted device, a wearable device, a terminal device in a next-generation communication system (such as an NR network), a terminal device in a future evolved Public Land Mobile Network (PLMN), or the like.

In the embodiments of the present application, the terminal device may be deployed on land, including indoor or outdoor, handheld, wearable or vehicle-mounted, or may also be deployed on water (e.g., on a ship), or may also be deployed in air (e.g., on an airplane, a balloon, and a satellite).

In the embodiments of the present application, the terminal device may be a Mobile Phone, a Pad, a computer with wireless transceiving functions, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include full-featured and large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In embodiments of the present application, the network device may be a device used for communicating with a mobile device. The network device may be an Access Point (AP) in WLAN, an evolved base station (Evolutional NodeB, eNB or eNodeB) in LTE, a relay station or an access point, an in-vehicle device, a wearable device, a network device (gNB) in an NR network, or a network device in a future evolved PLMN network, or a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water, or other places.

In the embodiments of the present application, the network device may provide services for a cell, and the terminal device communicates with the network device through transmission resources (e.g., frequency domain resources, or in other words, frequency spectrum resources) used by the cell. The cell may be a cell corresponding to the network device (e.g., a base station). The cell may belong to a macro base station or belong to a base station corresponding to a small cell. The small cell here may include a Metro cell, a Micro cell, a Pico cell, a Femto cell, or the like. These small cells have characteristics of small coverage range and low transmit power, which are applicable for providing a data transmission service with a high speed.

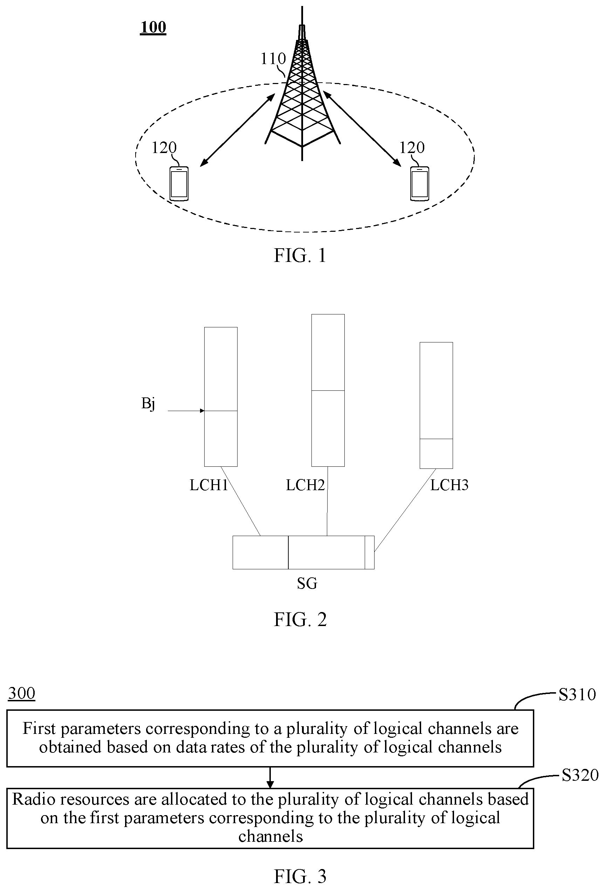

FIG. 1 exemplarily illustrates a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present application.

In an implementation, the communication system 100 may further include other network entities, such as a Mobility Management Entity (MME) and an Access and Mobility Management Function (AMF), which are not limited in the embodiments of the present application.

The network device may further include an access network device and a core network device. That is, the wireless communication system further includes multiple core networks used for communicating with the access network device. The access network device may be an evolutional node B (which may be abbreviated as eNB or e-NodeB), a macro base station, a micro base station (also referred to as a "small base station"), a Pico base station, an access point (AP), a transmission point (TP), a new generation Node B (gNodeB) or the like in a long-term evolution (LTE) system, a next-generation (mobile communication system) (next radio, NR) system or an authorized auxiliary access long-term evolution (LAA-LTE) system.

It should be understood that in the embodiments of the present application, a device having a communication function in a network/system may be referred to as a communication device. In an example of the communication system illustrated in FIG. 1, the communication device may include a network device and a terminal device, which have the communication function. The network device and the terminal device may be specific devices in the embodiments of the present application, and will not be detailed further here. The communication devices may further include other devices in the communication system, such as a network controller, a mobile management entity or other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that related objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence between the two, or may mean that there is an associated relationship between the two, or may mean a relationship of indicating and being indicated, a relationship of configuring and being configured, or the like.

To facilitate understanding of the technical solutions in the embodiments of the present application, the related technologies of the embodiments of the present application will be described below. The following related technologies, as optional solutions, may be arbitrarily combined with the technical solutions of the embodiments of the present application, which all falls within the protection scope of the embodiments of the present application.

In the 3G mobile communication systems of the 3GPP, such as Wideband Code Division Multiple Access (WCDMA), logical channel priority is the only reference parameter in an LCP process. Taking two logical channels (LCH_1 and LCH_2) as an example, the priorities of LCH_1 and LCH_2 are LCH1_P and LCH2_P, respectively; and buffers of data to be transmitted through LCH_1 and LCH_2 at a given moment are LCH1_Buf and LCH2_Buf, respectively. The size of a radio resource block participating in allocation may be represented as a serving grant (SG), and the terminal may calculate how many bytes the size of the radio resource block is based on the SG.

An example of a method for allocating radio resources to logical channels is as follows.

Step 1: the logical channels are arranged according to the priorities (assuming that the priority of LCH_1 is higher than that of LCH_2, so the first logical channel is LCH_1).

Step 2: the radio resource is allocated to LCH_1. If SG<=LCH_B1, the process ends; otherwise, proceed to Step 3.

Step 3: the remaining radio resource (i.e., SG-LCH1_Buf) is allocated to LCH_2.

When the number of logical channels is greater than two, the method remains the same. That is, the radio resources are allocated according to the priority order of the logical channels until the radio resources are exhausted or the last logical channel has been allocated.

This method may lead to a "starvation" phenomenon. That is, when the SG is smaller than the total of buffers of the logical channels and the high-priority logical channel always has a buffer to be transmitted, the low-priority logical channel either cannot be scheduled or obtains few radio resources, and thus, the basic Quality of Service (QoS) requirements cannot be met, resulting in the "starvation" phenomenon.

In the fourth generation (4G) and fifth generation (5G) mobile communication systems of the 3GPP, a token bucket algorithm is applied to the LCP, which may alleviate or even overcome the above starvation problem. The specific method is as follows.

Each logical channel is set with a priority bit rate (PBR) and a token bucket size (BS) according to QoS requirements, where the token bucket size may be represented by PBR_BS. A token variable Bj is set locally. Bj is accumulated for each logical channel over time, but the maximum value does not exceed PBR_BS, i.e., $Bj = Bj + PBR \times T$, $Bj = min(Bj, PBR\_BS)$. Where T is a time interval between two Bj increment calculations. For example, the steps in LCP are as follows (for the sake of convenience of description, assume that the priority of LCH_1 is higher than that of LCH_2).

Step 1: the radio resource is allocated to LCH_1 firstly, for example, $LCH1\_ASG = min(SG, LCH1\_Bj, LCH1\_Buf)$, where the radio resource allocated to LCH_1 is the minimum value among the unallocated SG, the token variable LCH1_Bj of LCH1 and the buffer size LCH1_Buf of LCH1. After the allocation, the allocated resource is subtracted from the SG, and the token variable and buffer size of LCH1 are updated. An example of the formula is shown below:

SG = SG - LCH1_ASG, representing that the allocated resource is subtracted from the SG;
LCH1_Bj = LCH1_Bj - LCH1_ASG, representing that the allocated resource is subtracted from the token variable of LCH1 and the token variable of LCH1 is updated; and
LCH1_Buf = LCH1_Buf - LCH1_ASG, representing that the allocated resource is subtracted from the buffer size of LCH_1 and the buffer of LCH_1 is updated.

If the SG still has resources remaining, the radio resource may continue to be allocated to LCH_2. For example, LCH2_ASG = min(SG, LCH2_Bj, LCH2_Buf), representing that the radio resource allocated to LCH_2 is the minimum value among the remaining SG, the token variable LCH2_Bj of LCH_2 and the buffer size LCH2_Buf of LCH_2.

After allocation, the allocated resource is subtracted from the SG, and the token variable and the buffer size of LCH_2 are updated. An example of the formula is shown below:

SG = SG - LCH2_ASG, representing that the allocated resource is subtracted from the SG;

LCH2_Bj = LCH2_Bj - LCH2_ASG, representing that the allocated resource is subtracted from the token variable of LCH2 and the token variable of LCH2 is updated; and

LCH2_Buf = LCH2_Buf - LCH2_ASG, representing that the allocated resource is subtracted from the buffer of LCH_2.

Step 2: if the SG remains greater than 0, the allocation may be continued according to the priority order of LCH_1 and LCH_2 until the radio resources SG are exhausted or LCH_2 has been allocated.

This algorithm is also applied to the case of more than two logical channels, as long as Steps 1 and 2 are continuously applied to the logical channels sorted according to the logical channel priorities in the same way.

The above solution overcomes the starvation problem in 3GPP 3G systems to a certain extent, but cannot completely avoid the starvation problem. When the allocatable radio resources are relatively smaller than the sum of buffers of logical channels participating in the LCP, the problem is particularly serious.

The following is an illustrative example.

In FIG. 2, there are three logical channels (LCH1, LCH2 and LCH3) participating in the LCP process. The boundary between the two blocks in each logical channel is the token Bj accumulated by each logical channel according to the set PBR. The part above Bj is the amount of demand for radio resource of the buffer of each logical channel that is relatively higher than Bj. Since the schedulable radio resources SG may generally be smaller than the sum of the tokens Bj of each logical channel, assuming the priority order of the logical channels is LCH1, LCH2 and LCH3, after the radio resources are allocated to LCH1 and LCH2 according to the above method, the radio resource that LCH3 can be allocated is very limited and smaller than its Bj. In other words, the starvation phenomenon still occurs in LCH3. If the schedulable radio resources remain scarce, the LCH3 will always be in the starvation state.

FIG. 3 is a schematic flowchart of a resource allocation method 300 according to an embodiment of the present application. Optionally, the method may be applied to the system illustrated in FIG. 1, but is not limited thereto. The method includes at least part of the following contents.

In S310, first parameters corresponding to a plurality of logical channels are obtained based on data rates of the plurality of logical channels.

In S320, radio resources are allocated to the plurality of logical channels based on the first parameters corresponding to the plurality of logical channels.

In the embodiments of the present application, the logical channel may generally include a control channel and a traffic channel. The control channel is mainly used to transmit control plane information, and the traffic channel is mainly used to transmit user plane information.

In the embodiments of the present application, the network may schedule the allocatable radio resources for the terminal device. The network device may schedule the allocatable radio resources to the terminal device through modes such as dynamic scheduling or semi-static scheduling. The terminal devices may allocate the allocatable radio resources scheduled by the network device for the plurality of logical channels for its own needs. The plurality of logical channels may include a full set or a subset of logical channels participating in the LCP. The LCP includes a process in which the terminal device allocates radio resources to the logical channels participating in the LCP according to the logical channel priority. In the embodiments of the present application, the radio resources are allocated between different logical channels based on parameters obtained according to the data rates of the logical channels, so that the radio resources can be allocated more reasonably. For example, the starvation problem of one or more low-priority logical channels may be mitigated.

In an implementation, a first parameter corresponding to a logical channel is used to represent a starvation level of the logical channel. For example, the greater the value of the first parameter corresponding to a logical channel, the higher the starvation level of the logical channel; and the smaller the value, the lower the starvation level of the logical channel.

In an implementation, a first parameter corresponding to a logical channel is negatively correlated with a current data rate of the logical channel. In the embodiments of the present application, the current data rate of a logical channel may include a data rate counted for the logical channel based on a start point of a time window up to the current slot. If a time window is 100ms, the current data rate may include a data rate counted from a start point 100ms prior to the current slot, up to the current slot. For example, the higher the current data rate of a logical channel, the smaller the value of the first parameter; and the lower the current data rate, the greater the value of the first parameter. The first parameter corresponding to a logical channel and the current data rate of the logical channel may be a linear negative correlation or a nonlinear negative correlation.

In an implementation, a first parameter corresponding to a logical channel is negatively correlated with a first ratio, and the first ratio is a ratio of a current data rate of the logical channel to a data rate required by QoS. In the embodiments of the present application, the data rate of a logical channel required by QoS may include a data rate that may satisfy a QoS requirement of the logical channel. The data rate required by QoS may be preset or calculated based on the QoS requirement. The first ratio may be obtained by dividing the current data rate of a logical channel by the data rate required by QoS of the logical channel. The greater the first ratio corresponding to a logical channel, the smaller the value of the first parameter; and the smaller the first ratio, the greater the value of the first parameter. The first parameter corresponding to a logical channel and the first ratio corresponding to the logical channel may be a linear negative correlation or a non-linear negative correlation.

In an implementation, the first parameter corresponding to a logical channel is negatively correlated with a logical channel priority of the logical channel. For example, the higher the logical channel priority of a logical channel, the smaller the value of the first parameter; and the lower the logical channel priority, the greater the value of the first parameter. The first parameter corresponding to a logical channel and the logical channel priority of the logical channel may be a linear negative correlation or a non-linear negative correlation.

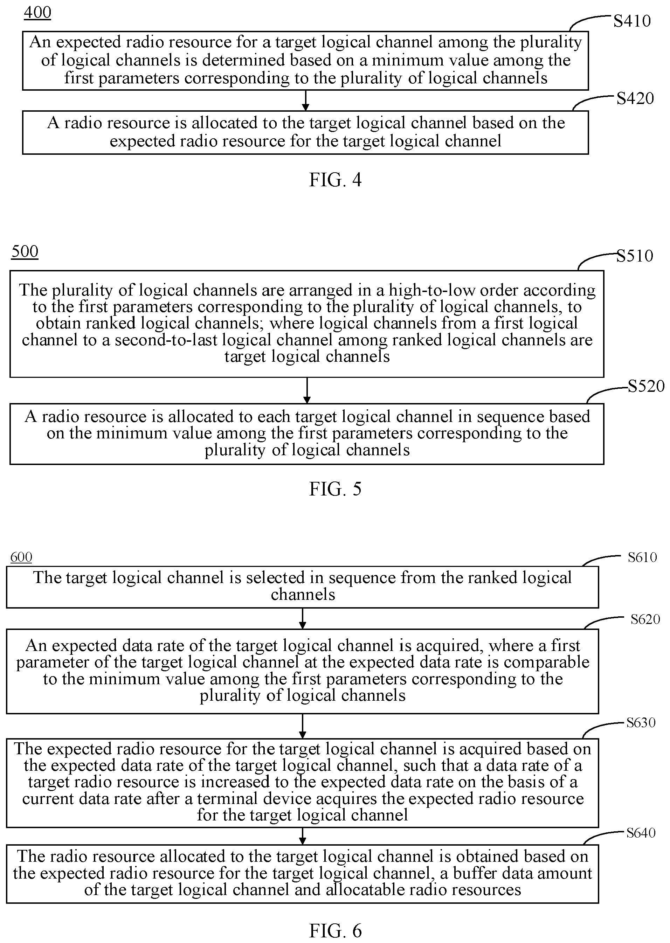

FIG. 4 is a schematic flowchart of a resource allocation method 400 according to another embodiment of the present application. The method 400 may include one or more features of the method described above. In an implementation, the step S320 in which the radio resources are allocated to the plurality of logical channels based on the first parameters corresponding to the plurality of logical channels includes the following.

In S410, an expected radio resource for a target logical channel among the plurality of logical channels is determined based on a minimum value among the first parameters corresponding to the plurality of logical channels.

In S420, a radio resource is allocated to the target logical channel based on the expected radio resource for the target logical channel.

In the embodiments of the present application, the plurality of logical channels may be arranged firstly in descending order based on the first parameters corresponding to each of the plurality of logical channels. The first parameter corresponding to first-ranked logical channel has the maximum value, while the first parameter corresponding to the last-ranked logical channel has the minimum value. After the ordering, radio resources may be allocated to the ranked logical channels in sequence. The target logical channel is one channel in the ranked logical channels. The expected radio resource for any target logical channel may be determined based on the minimum value among the first parameters. Then, the radio resource may be allocated to the target logical channel based on the expected radio resource for the target logical channel. Since the first parameter may reflect the starvation level and the first parameter is related to the data rate of the logical channel, determining the expected radio resource for the target logical channel based on the minimum value among the first parameters helps to achieve the same or similar starvation level for the plurality of logical channels, thereby allocating radio resources more fairly and reasonably.

FIG. 5 is a schematic flowchart of a resource allocation method 500 according to another embodiment of the present application. The method 500 may include one or more features of the methods described above. In an implementation, the step S410 in which the expected radio resource for the target logical channel among the plurality of logical channels is determined based on the minimum value among the first parameters corresponding to the plurality of logical channels includes the following.

In S510, the plurality of logical channels are arranged in a high-to-low order according to the first parameters corresponding to the plurality of logical channels, to obtain ranked logical channels; where logical channels from a first logical channel to a second-to-last logical channel among ranked logical channels are target logical channels.

In S520, a radio resource is allocated to each target logical channel in sequence based on the minimum value among the first parameters corresponding to the plurality of logical channels.

In the embodiments of the present application, after the logical channels are arranged in the high-to-low order according to the first parameters, the last logical channel is a logical channel with the minimum first parameter, and the logical channels other than the last logical channel may be served as the target logical channels. For example, if N logical channels are arranged in the high-to-low order according to the first parameters corresponding to the N logical channels, for the first to the (N-1)-th target logical channels among the ranked logical channels, the step of allocating the radio resources to the target logical channels based on the minimum value among the first parameters may be performed. In some cases, the last logical channel among the ranked logical channels may also be the target logical channel.

FIG. 6 is a schematic flowchart of a resource allocation method 600 according to another embodiment of the present application. The method 600 may include one or more features of the methods described above. In an implementation, the step S520 in which the radio resource is allocated to each target logical channel in sequence based on the minimum value among the first parameters corresponding to the plurality of logical channels includes the following.

In S610, the target logical channel is selected in sequence from the ranked logical channels.

In S620, an expected data rate of the target logical channel is acquired, where a first parameter of the target logical channel at the expected data rate is comparable to the minimum value among the first parameters corresponding to the plurality of logical channels.

In S630, the expected radio resource for the target logical channel is acquired based on the expected data rate of the target logical channel, such that a data rate of a target radio resource is increased to the expected data rate on the basis of a current data rate after a terminal device acquires the expected radio resource for the target logical channel.

In S640, the radio resource allocated to the target logical channel is obtained based on the expected radio resource for the target logical channel, a buffer data amount of the target logical channel and allocatable radio resources.

In the embodiments of the present application, the target logical channel may be selected from the ranked logical channels firstly, and then the expected data rate of the target logical channel is determined based on the minimum value among the first parameters. Under the expected data rate of the target logical channel, the value of the first parameter corresponding to the target logical channel may be equal to the minimum value or the difference between the first parameter corresponding to the target logical channel and the minimum value may be smaller than a threshold. The expected data rate of the target logical channel may be different from the current data rate of the target logical channel; for example, the expected data rate of the target logical channel is smaller than the current data rate of the target logical channel. In this case, the expected radio resource for the target logical channel may be calculated based on the expected data rate of the target logical channel. Then, the expected radio resource for the target logical channel, the buffer data amount of the target logical channel and the allocatable radio resources are compared to determine the radio resource allocated to the target logical channel. The buffer data amount may also be referred to as the buffer size. If the target logical channel is the first-ranked logical channel, the allocatable radio resources may include the total radio resources allocated by the network. If the target logical channel is not the first-ranked logical channel, the allocatable radio resources may include the remaining radio resources after the radio resources have been allocated to the logical channels ranked prior to the target logical channel.

In an implementation, in the step S620, the first parameter of the target logical channel at the expected data rate being comparable to the minimum value among the first parameters corresponding to the plurality of logical channels includes at least one of:

the first parameter of the target logical channel at the expected data rate being equal to the minimum value among the first parameters corresponding to the plurality of logical channels; or

a difference between the first parameter of the target logical channel at the expected data rate and the minimum value among the first parameters corresponding to the plurality of logical channels being smaller than a set threshold.

In the embodiments of the present application, the set threshold may be pre-configured in the terminal device or may be transmitted to the terminal device by the network.

In an implementation, in a case where the target logical channel to which the radio resource is allocated is a first-ranked logical channel, the radio resource is a minimum value among a radio resource size allocated to the target logical channel by a network, the buffer data amount of the target logical channel and the expected radio resource; or

in a case where the target logical channel to which the radio resource is allocated is not a first-ranked logical channel, the radio resource allocated to the target logical channel is a minimum value among a remaining radio resource size for the target logical channel, the buffer data amount of the target logical channel and the expected radio resource.

For example, the size of the total allocatable radio resource transmitted by the network to the terminal device is SG_A, the buffer data amount of the target logical channel is BF, and the expected radio resource is EP. If the target logical channel is the first-ranked channel according to the first parameters, the radio resource allocated to the target logical channel is $SG\_1 = Min(SG\_A, BF, EP)$. If the target logical channel is not the first-ranked channel according to the first parameters, and the remaining radio resource size after the resource is allocated to the previous channel of the target logical channel is SG_R, then the radio resource allocated to the target logical channel are $SG\_n = Min(SG\_R, BF, EP)$.

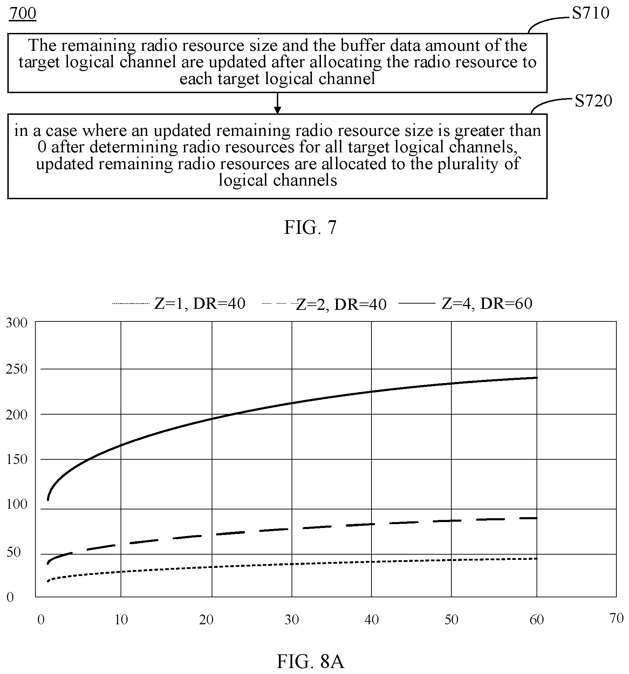

FIG. 7 is a schematic flowchart of a resource allocation method 700 according to another embodiment of the present application. The method 700 may include one or more features of the methods described above. In an implementation, the method further includes the following.

In S710, the remaining radio resource size and the buffer data amount of the target logical channel are updated after allocating the radio resource to each target logical channel.

For example, if the radio resource before allocating to a certain target logical channel is SG_R, and the radio resource allocated to the target logical channel is SG_n, then after the allocation, the remaining radio resource size is updated to SG_R - SG_n, and the buffer data amount of the target logical channel may be updated from BF_1 before the allocation to BF_1 - SG_n.

In an implementation, the method further includes the following.

In S720, in a case where an updated remaining radio resource size is greater than 0 after determining radio resources for all target logical channels, updated remaining radio resources are allocated to the plurality of logical channels.

In an implementation, a manner of allocating the updated remaining radio resources to the plurality of logical channels includes: equal allocation, allocation according to logical channel priority, or allocation according to an arranging order of the first parameters. For example, if the number of the plurality of logical channels is N, the updated remaining radio resources may be divided by N and then evenly allocated to these N logical channels. For another example, the updated remaining radio resources may be allocated according to the priority levels of the logical channels, with higher priority channels receiving more resources and lower priority channels receiving fewer. Alternatively, allocation may be based on the logical channel priority and token variables; and the specific methods may refer to the relevant descriptions above. For another example, the plurality of logical channels are arranged according to the first parameters corresponding to the plurality of logical channels, to obtain the ranked logical channels. The updated remaining radio resources may be allocated in sequence according to the order of the ranked logical channels.

In an implementation, the first parameter is represented by a curvature of a first curve. In the embodiments of the present application, a logical channel may have a first curve. The function of the first curve may represent the relationship between the current data rate of the logical channel and satisfaction. Therefore, the first curve may also be referred to as the satisfaction curve. The greater the value of the first curve, the higher the satisfaction level; and the smaller the value of the first curve, the lower the satisfaction level.

In an implementation, the first curve increases as the current data rate of the logical channel increases, and the curvature of the first curve decreases as the current data rate of the logical channel increases. For example, the higher the current data rate, the greater the value of the first curve; the lower the current data rate, the smaller the value of the first curve. The curvature of the first curve may be calculated based on the first curve. For example, the curvature function of the first curve is a function obtained by differentiating the function of the first curve. The higher the current data rate, the smaller the curvature of the first curve; and the lower the current data rate, the greater the curvature of the first curve.

In an implementation, the current data rate of the logical channel includes a data rate counted for the logical channel up to the current time slot.

In an implementation, a constant used to determine the first curve includes at least one of:

a first constant being used to represent a data rate set according to a QoS requirement of a logical channel;
a second constant being used to represent a scaling factor corresponding to logical channel priority; or
a third constant being an empirical value.

In an implementation, a correspondence between the logical channel priority and the scaling factor is configured by a network or is set by an empirical value.

In an implementation, a functional formula of the first curve includes:

$$F(x) = Z \times DR \times \left(\frac{x}{DR}\right)^B$$

Where F(x) represents a function of the first curve, x represents a current data rate of a logical channel, DR represents the first constant, Z represents the second constant, and B represents the third constant. In the function formula of the first curve, F(x) may increase as x increases and may decrease as x decreases.

In an implementation, a function formula of the curvature of the first curve includes:

$$dF(x) = Z \times B \times \left(\frac{x}{DR}\right)^{B-1}$$

Where dF(x) represents a curvature function of the first curve. In the function formula of the first curve, the value of the first parameter dF(x) may decrease as x increases, and may increase as x decreases.

In the embodiments of the present application, the first parameter of each logical channel may be calculated by substituting the current data rate x of each logical channel into the function formula of the curvature. Furthermore, the minimum value among the first parameters of the plurality of logical channels may be determined. After the plurality of logical channels are arranged in descending order according to the first parameters, radio resources may be allocated starting from the first-ranked logical channel. By substituting the minimum value among the first parameters obtained from the above calculation into the function formula of the curvature of a certain logical channel, the expected data rate of the logical channel may be calculated. Furthermore, based on the expected data rate of the logical channel, the expected radio resource for the logical channel may be calculated using methods such as sliding window method.

In some application scenarios, the cause of the starvation phenomenon is mainly that in the first step of the LCP algorithm of the 4G/5G system, radio resources are always allocated to logical channels strictly according to the order of logical channel priority and the accumulated tokens Bj. When the radio resources are relatively sufficient, the LCP algorithm should ensure that high-priority logical channels meet the QoS requirement specified by PBR first. However, when the radio resources are relatively scarce, if the same principle is continued to maintain, the starvation problem will occur. To improve fairness, in this case, all logical channels should tolerate a certain starvation level, but higher-priority logical channels are allowed to have a lower level of starvation, while lower-priority logical channels are allowed to have a relatively higher level of starvation.

A method for improving logical channel scheduling performance may include introducing a satisfaction curve, where the variable of the curve is the current data rate of the logical channel. The variable of the curve increases as the data rate increases, while the curvature of the satisfaction curve decreases as the data rate increases. When the data rate of the logical channel is relatively low, such as lower than or close to the PBR, the increase of the data rate will cause the satisfaction curve to grow rapidly, that is, the satisfaction level of the logical channel is relatively low at this time. When the data rate is relatively high, such as when it is close to the maximum rate, the increase of the data rate makes the increase of the satisfaction curve relatively slow, that is, the satisfaction level of the logical channel is relatively high at this time. The curvature of the satisfaction curve is exactly the opposite of the value of the satisfaction curve (i.e., the satisfaction level), so the curvature of the satisfaction curve may be used to characterize the starvation level of the logical channel. From the perspective of scheduling, radio resources need to be preferentially allocated to the logical channels corresponding to curves with higher starvation levels until their starvation levels are comparable. This method is applied to logical channels with the same logical channel priority. To apply this method to logical channels with different logical channel priorities, the priorities of the logical channel may be converted into scaling factors. Assuming the premise of adopting a satisfaction curve, the higher the priority of a logical channel, the greater the scaling factor of the logical channel.

An example is as follows.

The satisfaction curve may be expressed as a function, and an example of the formula is as follows:

$$F(x) = Z \times DR \times \left(\frac{x}{DR}\right)^{B}, 0 < B < 1 \qquad (1)$$

x: a variable, which is a data rate counted for the logical channel up to the current slot;

DR: a constant, which is a data rate set according to the QoS requirement of the logical channel;

Z: a constant, which is a scaling factor obtained by looking up a table according to the logical channel priority; and

B: a constant, which may be set based on experience or configured by a network.

The mapping relationship between the parameter Z and the logical channel priority may also be set based on experience or configured by a network. The following Table 1 shows an example of the mapping relationship between the parameter Z and the logical channel priority.

Table 1

| Logical Channel Priority (LCH priority) | Scaling factor Z |
|---|---|
| 0 | 8/1 |
| 1 | 8/2 |
| 2 | 8/3 |
| 3 | 8/4 |
| 4 | 8/5 |
| 5 | 8/6 |
| 6 | 8/7 |
| 7 | 8/8 |

The smaller the value of the priority in the table may indicate that the priority is higher.

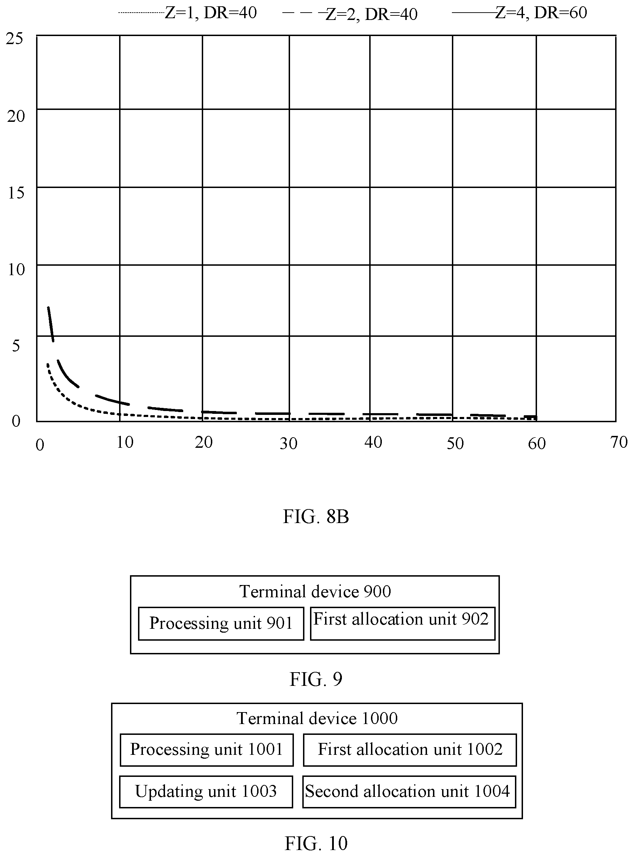

For example, assuming B=0.2, an example of the satisfactory curve may be illustrated in FIG. 8A, and the curvature curve corresponding to the satisfactory curve may be illustrated in FIG. 8B. The horizontal axes of the satisfaction curve and curvature curve represent the current data rate of the logical channel, the vertical axis of the satisfaction curve may represent the satisfaction level, and the vertical axis of the curvature curve may represent the starvation level.

An example of a function of the curvature of this satisfaction curve at the variable x is shown in the following formula:

$$dF(x) = Z \times B \times \left(\frac{x}{DR}\right)^{B-1}, 0<B<1 \qquad (2)$$

The greater the value of the function of the curvature may indicate that the starvation level is higher.

An example of a specific method for allocating radio resources is as follows.

Step 1: the current data rate of each logical channel is counted firstly. Then, the current curvature corresponding to each logical channel is calculated according to formula (2), and the logical channels are arranged in a high-to-low order according to the curvatures.

Step 2: a minimum curvature CV_min is determined according to the calculation results in Step 1.

Step 3: the next logical channel is selected from the ranked logical channels (if this is the first selection, the first-ranked logical channel is selected).

Step 4: a point (i.e., a dr_target) is found on the satisfaction curve of the logical channel, so that the curvature of the logical channel at this point is equal to or close to CV_min.

Step 5: based on the difference between the current data rate of the logical channel (referred to as dr_current) and the found target point dr_target, the maximum radio resource required by the logical channel to meet the difference is calculated.

In Steps 4 and 5, the target point dr_target may be the expected target rate dr_expected, and the maximum radio resource may be the expected radio resource SG. An example of determining dr_expected and SG is as follows.

Assuming that the rate estimation is performed according to the sliding window method, and the length of the sliding window is M milliseconds, then the estimated rate dr_current = sum(TB1, TB2, TB3....)/M, where TB may be the size of the data block transmitted over the logical channel within the current time window in history. If the currently allocated resource is SG, then the estimated rate is dr_expected = sum(TB2,TB3,...,SG)/M, which means that the oldest TB1 is removed and the current SG is added, and then the estimate is performed.

Assuming that the target minimum curvature is CV_min, CV_min is substituted into the curvature function of formula (2), then dF(dr_expected) = CV_min. The expected data rate dr_expected may be calculated based on the pre-defined curvature function. Then, according to the sliding window estimation method described above, the expected radio resource SG of the logical channel may be calculated according to dr_expected.

Step 6: if the current buffer size of the logical channel may be represented as buffer, the radio resource that needs to be allocated may be calculated as: sg=Min(SG, buffer, resource). Where SG is the current remaining radio resource that can be allocated, and min() is the operation of taking the minimum value.

Step 7: the current radio resource that can be allocated is updated as SG=SG-sg, and the buffer of the logical channel is updated as buffer=buffer-sg.

Step 8: if the updated remaining radio resource size SG is greater than 0, and the current logical channel is not the second-to-last logical channel, step 3 may be returned; otherwise, proceed to step 9.

Step 9: if the updated remaining radio resource size SG is greater than 0, then the SG is allocated equally to each logical channel, or is allocated based on the logical channel priority, or the like.

In the embodiments of the present application, the priority and rate requirement of the logical channel are taken as parameters of the satisfaction curve, and the curvature of the satisfaction curve may be used to characterize the starvation level for radio resource of each logical channel. Radio resources are allocated between different logical channels by a method that ensures each logical channel reaches the same or similar starvation level, which helps to allocate resources reasonably and achieve the purpose of fair allocation.

FIG. 9 is a schematic block diagram of a terminal device 900 according to an embodiment of the present application. The terminal device 900 may include:

a processing unit 901, configured to obtain first parameters corresponding to a plurality of logical channels based on data rates of the plurality of logical channels; and

a first allocation unit 902, configured to allocate radio resources to the plurality of logical channels based on the first parameters corresponding to the plurality of logical channels.

In an implementation, a first parameter corresponding to a logical channel is used to represent a starvation level of the logical channel.

In an implementation, a first parameter corresponding to a logical channel is negatively correlated with a current data rate of the logical channel.

In an implementation, a first parameter corresponding to a logical channel is negatively correlated with a first ratio, the first ratio being a ratio of a current data rate of the logical channel to a data rate required by QoS.

In an implementation, a first parameter corresponding to a logical channel is negatively correlated with a logical channel priority of the logical channel.

In an implementation, the first allocation unit 902 is further configured to:

determine an expected radio resource for a target logical channel among the plurality of logical channels based on a minimum value among the first parameters corresponding to the plurality of logical channels; and

allocate a radio resource to the target logical channel based on the expected radio resource for the target logical channel.

In an implementation, where determining the expected radio resource for the target logical channel among the plurality of logical channels based on the minimum value among the first parameters corresponding to the plurality of logical channels includes:

arranging the plurality of logical channels in a high-to-low order according to the first parameters corresponding to the plurality of logical channels, to obtain ranked logical channels; where logical channels from a first logical channel to a second-to-last logical channel among the ranked logical channels are target logical channels; and
allocating a radio resource to each target logical channel in sequence based on the minimum value among the first parameters corresponding to the plurality of logical channels.

In an implementation, the first allocation unit 902 is further configured to:

select the target logical channel in sequence from the ranked logical channels;
acquire an expected data rate of the target logical channel, where a first parameter of the target logical channel at the expected data rate is comparable to the minimum value among the first parameters corresponding to the plurality of logical channels;
acquire the expected radio resource for the target logical channel based on the expected data rate of the target logical channel, such that a data rate of a target radio resource is increased to the expected data rate on the basis of a current data rate after the terminal device acquires the expected radio resource for the target logical channel; and
obtain the radio resource allocated to the target logical channel based on the expected radio resource for the target logical channel, a buffer data amount of the target logical channel and allocatable radio resources.

In an implementation, the first parameter of the target logical channel at the expected data rate being comparable to the minimum value among the first parameters corresponding to the plurality of logical channels includes at least one of:

the first parameter of the target logical channel at the expected data rate being equal to the minimum value among the first parameters corresponding to the plurality of logical channels; or
a difference between the first parameter of the target logical channel at the expected data rate and the minimum value among the first parameters corresponding to the plurality of logical channels being smaller than a set threshold.

In an implementation, in a case where the target logical channel to which the radio resource is allocated is a first-ranked logical channel, the radio resource is a minimum value among a radio resource size allocated to the target logical channel by a network, the buffer data amount of the target logical channel and the expected radio resource; or
in a case where the target logical channel to which the radio resource is allocated is not a first-ranked logical channel, the radio resource allocated to the target logical channel is a minimum value among a remaining radio resource size for the target logical channel, the buffer data amount of the target logical channel and the expected radio resource.

FIG. 10 is a schematic block diagram of a terminal device 1000 according to another embodiment of the present application. The device 1000 may include:

a processing unit 1001, configured to obtain first parameters corresponding to a plurality of logical channels based on data rates of the plurality of logical channels; and
a first allocation unit 1002, configured to allocate radio resources to the plurality of logical channels based on the first parameters corresponding to the plurality of logical channels.

The functions of the processing unit 1001 and the first allocation unit 1002 may be referred to the relevant description of the device 900.

In an implementation, as illustrated in FIG. 10, the device further includes:
an updating unit 1003, configured to update the remaining radio resource size and the buffer data amount of the target logical channel after the radio resource is allocated to each target logical channel.

In an implementation, as illustrated in FIG. 10, the device further includes:
a second allocation unit 1004, configured to, in a case where an updated remaining radio resource size is greater than 0 after radio resources for all target logical channels are determined, allocate updated remaining radio resources to the plurality of logical channels.

In an implementation, a manner for allocating the updated remaining radio resources to the plurality of logical channels includes: equal allocation, allocation according to logical channel priority, or allocation according to an arranging order of the first parameters.

In an implementation, the first parameter is represented by a curvature of a first curve.

In an implementation, the first curve increases as a current data rate of a logical channel increases, and the curvature of the first curve decreases as the current data rate of the logical channel increases.

In an implementation, the current data rate of the logical channel includes a data rate counted for the logical channel up to a current slot.

In an implementation, a constant used to determine the first curve include at least one of:

a first constant being used to represent a data rate set according to a QoS requirement of a logical channel;
a second constant being used to represent a scaling factor corresponding to logical channel priority; or
a third constant being an empirical value.

In an implementation, a correspondence between the logical channel priority and the scaling factor is configured by a network or is set by an empirical value.

In an implementation, a functional formula of the first curve includes:

$$F(x) = Z \times DR \times \left(\frac{x}{DR}\right)^B$$

Where F(x) represents a function of the first curve, x represents a current data rate of a logical channel, DR represents the first constant, Z represents the second constant, and B represents the third constant.

In an implementation, a function formula of the curvature of the first curve includes:

$$dF(x) = Z \times B \times \left(\frac{x}{DR}\right)^{B-1}$$

Where dF(x) represents a curvature function of the first curve.

The terminal devices 900 and 1000 in the embodiments of the present application are capable of implementing the corresponding functions of the terminal device in the above method embodiments. The processes, functions, implementations and beneficial effects corresponding to various modules (sub-modules, units, components, or the like) in the terminal device 900 or 1000 may refer to the corresponding description in the above method embodiments, and will not be repeated here. It is to be noted that the functions described with respect to the various modules (sub-modules, units, components, or the like) in the terminal device 900 or 1000 in the embodiments of the present application may be implemented by different modules (sub-modules, units, components, or the like) or by the same module (sub-module, unit, component, or the like).

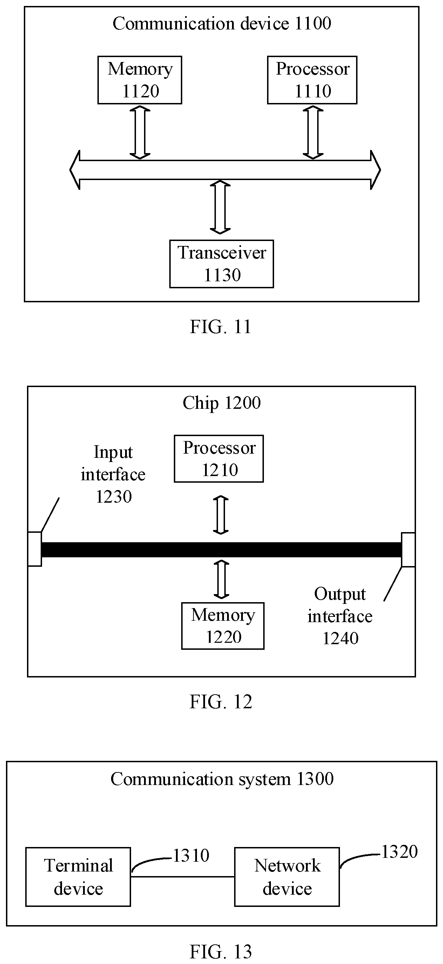

FIG. 11 is a schematic structural diagram of a communication device 1100 according to the embodiments of the present application. The communication device 1100 includes a processor 1110, and the processor 1110 may call a computer program from a memory and run the computer program, to enable the communication device 1100 to implement the method in the embodiments of the present application.

In an implementation, the communication device 1100 may further include a memory 1120. The processor 1110 may call a computer program from the memory 1120 and run the computer program, to enable the communication device 1100 to implement the method in the embodiments of the present application.

The memory 1120 may be a separate device independent of the processor 1110, or may be integrated into the processor 1110.

In an implementation, the communication device 1100 may further include a transceiver 1130, and the processor 1110 may control the transceiver 130 to communicate with other device, and specifically, to transmit information or data to other devices, or receive information or data transmitted by other devices.

The transceiver 1130 may include a transmitter and a receiver. The transceiver 1130 may further include antenna(s), and the number of antenna(s) may be one or more.

In an implementation, the communication device 1100 may be the terminal device in the embodiments of the present application, and the communication device 1100 may implement the corresponding procedures implemented by the terminal device in the various methods in the embodiments of the present application, which will not be repeated here for the sake of brevity.

FIG. 12 is a schematic structural diagram of a chip 1200 according to the embodiments of the present application. The chip 1200 includes a processor 1210, and the processor 1210 may call a computer program from a memory and run the computer program, to implement the method in the embodiments of the present application.

In an implementation, the chip 1200 may further include a memory 1220. The processor 1210 may call a computer program from the memory 1220 and run the computer program, to implement the method performed by the terminal device or the network device in the embodiments of the present application.

The memory 1220 may be a separate device independent of the processor 1210, or may be integrated into the processor 1210.

In an implementation, the chip 1200 may further include an input interface 1230. The processor 1210 may control the input interface 1230 to communicate with other devices or chips, and specifically, the input interface 1230 may obtain information or data transmitted by other devices or chips.

In an implementation, the chip 1200 may further include an output interface 1240. The processor 1210 may control the output interface 1240 to communicate with other devices or chips, and specifically, the output interface 1240 may output information or data to other devices or chips.

In an implementation, the chip may be applied to the network device in the embodiments of the present application, and the chip may implement the corresponding processes implemented by the network device in the various methods in the embodiments of the present application, which will not be repeated here for the sake of brevity.

In an implementation, the chip may be applied to the terminal device in the embodiments of the present application, and the chip may implement the corresponding processes implemented by the terminal device in the various methods in the embodiments of the present application, which will not be repeated here for the sake of brevity.

The chips applied to the network device and the terminal devices may be the same chip or different chips.

It should be understood that the chip mentioned in the embodiments of the present application may also be referred to as a system on chip, a system chip, a chip system or a system-on-chip chip, or the like.

The above processor may be a general-purpose processor, a digital signal processor (DSP), a field programmable gate array (FPGA), an application specific integrated circuit (ASIC) or other programmable logic devices, transistor logic devices, discrete hardware components, or the like. The general-purpose processor mentioned above may be a microprocessor, any conventional processor, or the like.

The above memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above memory is exemplary but not limiting illustration, for example, the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not limited to, these and any other suitable types of memories.

FIG. 13 is a schematic block diagram of a communication system 1300 according to the embodiments of the present application. The communication system 1300 includes a terminal device 1310 and a network device 1320.

The terminal device 1310 is configured to obtain first parameters corresponding to a plurality of logical channels based on data rates of the plurality of logical channels; and allocate radio resources to the plurality of logical channels based on the first parameters corresponding to the plurality of logical channels.

The network device 1320 is configured to transmit information about allocatable radio resources to the terminal device.

The terminal device 1310 may be configured to implement the corresponding functions implemented by the terminal device in the above method, and the network device 1320 may be configured to implement the corresponding functions implemented by the network device in the above method, which will not be repeated here for the sake of brevity.

The above embodiments may be implemented in whole or in part through software, hardware, firmware, or any combination thereof. When implemented by using software, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable devices. The computer instructions may be stored in a computer-readable storage medium or transmitted from one computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It is to be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

**Claims**

1. A resource allocation method, comprising:

   obtaining first parameters corresponding to a plurality of logical channels based on data rates of the plurality of logical channels; and
   allocating radio resources to the plurality of logical channels based on the first parameters corresponding to the plurality of logical channels.

2. The method according to claim 1, wherein a first parameter corresponding to a logical channel is used to represent a starvation level of the logical channel.

3. The method according to claim 1, wherein a first parameter corresponding to a logical channel is negatively correlated with a current data rate of the logical channel.

4. The method according to claim 1, wherein a first parameter corresponding to a logical channel is negatively correlated with a first ratio, the first ratio being a ratio of a current data rate of the logical channel to a data rate required by Quality of Service (QoS).

5. The method according to claim 1, wherein a first parameter corresponding to a logical channel is negatively correlated with a logical channel priority of the logical channel.

6. The method according to any one of claims 1 to 5, wherein allocating the radio resources to the plurality of logical channels based on the first parameters corresponding to the plurality of logical channels comprises:

   determining an expected radio resource for a target logical channel among the plurality of logical channels based on a minimum value among the first parameters corresponding to the plurality of logical channels; and
   allocating a radio resource to the target logical channel based on the expected radio resource for the target logical channel.

7. The method according to claim 6, wherein determining the expected radio resource for the target logical channel among the plurality of logical channels based on the minimum value among the first parameters corresponding to the plurality of logical channels comprises:

   arranging the plurality of logical channels in a high-to-low order according to the first parameters corresponding to the plurality of logical channels, to obtain ranked logical channels; wherein logical channels from a first logical channel to a second-to-last logical channel among the ranked logical channels are target logical channels; and
   allocating a radio resource to each target logical channel in sequence based on the minimum value among the first parameters corresponding to the plurality of logical channels.

8. The method according to claim 7, wherein allocating the radio resource to each target logical channel in sequence based on the minimum value among the first parameters corresponding to the plurality of logical channels comprises:

   selecting the target logical channel in sequence from the ranked logical channels;
   acquiring an expected data rate of the target logical channel, wherein a first parameter of the target logical channel at the expected data rate is comparable to the minimum value among the first parameters corresponding to the plurality of logical channels;
   acquiring the expected radio resource for the target logical channel based on the expected data rate of the target logical channel, such that a data rate of a target radio resource is increased to the expected data rate on the basis of a current data rate after a terminal device acquires the expected radio resource for the target logical channel; and

obtaining the radio resource allocated to the target logical channel based on the expected radio resource for the target logical channel, a buffer data amount of the target logical channel and allocatable radio resources.

9. The method according to claim 8, wherein the first parameter of the target logical channel at the expected data rate being comparable to the minimum value among the first parameters corresponding to the plurality of logical channels comprises at least one of:

the first parameter of the target logical channel at the expected data rate being equal to the minimum value among the first parameters corresponding to the plurality of logical channels; or
a difference between the first parameter of the target logical channel at the expected data rate and the minimum value among the first parameters corresponding to the plurality of logical channels being smaller than a set threshold.

10. The method according to claim 8 or 9, wherein in a case where the target logical channel to which the radio resource is allocated is a first-ranked logical channel, the radio resource is a minimum value among a radio resource size allocated to the target logical channel by a network, the buffer data amount of the target logical channel and the expected radio resource; or
in a case where the target logical channel to which the radio resource is allocated is not a first-ranked logical channel, the radio resource allocated to the target logical channel is a minimum value among a remaining radio resource size for the target logical channel, the buffer data amount of the target logical channel and the expected radio resource.

11. The method according to claim 10, further comprising:
updating the remaining radio resource size and the buffer data amount of the target logical channel after allocating the radio resource to each target logical channel.

12. The method according to any one of claims 7 to 11, further comprising:
in a case where an updated remaining radio resource size is greater than 0 after determining radio resources for all target logical channels, allocating updated remaining radio resources to the plurality of logical channels.

13. The method according to claim 12, wherein a manner for allocating the updated remaining radio resources to the plurality of logical channels comprises: equal allocation, allocation according to logical channel priority, or allocation according to an arranging order of the first parameters.

14. The method according to any one of claims 1 to 13, wherein the first parameter is represented by a curvature of a first curve.

15. The method according to claim 14, wherein the first curve increases as a current data rate of a logical channel increases, and the curvature of the first curve decreases as the current data rate of the logical channel increases.

16. The method according to claim 15, wherein the current data rate of the logical channel comprises a data rate counted for the logical channel up to a current slot.

17. The method according to any one of claims 14 to 16, wherein a constant used to determine the first curve comprises at least one of:

a first constant being used to represent a data rate set according to a QoS requirement of a logical channel;
a second constant being used to represent a scaling factor corresponding to logical channel priority; or
a third constant being an empirical value.

18. The method according to claim 17, wherein a correspondence between the logical channel priority and the scaling factor is configured by a network or is set by an empirical value.

19. The method according to claim 17 or 18, wherein a function formula of the first curve comprises:

$$F(x) = Z \times DR \times \left(\frac{x}{DR}\right)^{B};$$

wherein F(x) represents a function of the first curve, x represents a current data rate of a logical channel, DR represents the first constant, Z represents the second constant, and B represents the third constant.

20. The method according to claim 19, wherein a function formula of the curvature of the first curve comprises:

$$d\mathrm{F}(\mathrm{x}) = \mathrm{Z} \times \mathrm{B} \times \left(\frac{\mathrm{x}}{\mathrm{DR}}\right)^{\mathrm{B}-1}$$

wherein dF(x) represents a curvature function of the first curve.

21. A terminal device, comprising:

a processing unit, configured to obtain first parameters corresponding to a plurality of logical channels based on data rates of the plurality of logical channels; and
an allocation unit, configured to allocate radio resources to the plurality of logical channels based on the first parameters corresponding to the plurality of logical channels.

22. The device according to claim 21, wherein a first parameter corresponding to a logical channel is used to represent a starvation level of the logical channel.

23. The device according to claim 21, wherein a first parameter corresponding to a logical channel is negatively correlated with a current data rate of the logical channel.

24. The device according to claim 21, wherein a first parameter corresponding to a logical channel is negatively correlated with a first ratio, the first ratio being a ratio of a current data rate of the logical channel to a data rate required by Quality of Service (QoS).

25. The device according to claim 21, wherein a first parameter corresponding to a logical channel is negatively correlated with a logical channel priority of the logical channel.

26. The device according to any one of claims 21 to 25, wherein allocating the radio resources to the plurality of logical channels based on the first parameters corresponding to the plurality of logical channels comprises:

determining an expected radio resource for a target logical channel among the plurality of logical channels based on a minimum value among the first parameters corresponding to the plurality of logical channels; and
allocating a radio resource to the target logical channel based on the expected radio resource for the target logical channel.

27. The device according to claim 26, wherein determining the expected radio resource for the target logical channel among the plurality of logical channels based on the minimum value among the first parameters corresponding to the plurality of logical channels comprises:

arranging the plurality of logical channels in a high-to-low order according to the first parameters corresponding to the plurality of logical channels, to obtain ranked logical channels; wherein logical channels from a first logical channel to a second-to-last logical channel among the ranked logical channels are target logical channels; and
allocating a radio resource to each target logical channel in sequence based on the minimum value among the first parameters corresponding to the plurality of logical channels.

28. The device according to claim 27, wherein allocating the radio resource to each target logical channel in sequence based on the minimum value among the first parameters corresponding to the plurality of logical channels comprises:

selecting the target logical channel in sequence from the ranked logical channels;
acquiring an expected data rate of the target logical channel, wherein a first parameter of the target logical channel at the expected data rate is comparable to the minimum value among the first parameters corresponding to the plurality of logical channels;
acquiring the expected radio resource for the target logical channel based on the expected data rate of the target logical channel, such that a data rate of a target radio resource is increased to the expected data rate on the basis of a current data rate after the terminal device acquires the expected radio resource for the target logical channel; and

obtaining the radio resource allocated to the target logical channel based on the expected radio resource for the target logical channel, a buffer data amount of the target logical channel and allocatable radio resources.

29. The device according to claim 28, wherein the first parameter of the target logical channel at the expected data rate being comparable to the minimum value among the first parameters corresponding to the plurality of logical channels comprises at least one of:

the first parameter of the target logical channel at the expected data rate being equal to the minimum value among the first parameters corresponding to the plurality of logical channels; or

a difference between the first parameter of the target logical channel at the expected data rate and the minimum value among the first parameters corresponding to the plurality of logical channels being less than a set threshold.

30. The device according to claim 28 or 29, wherein in a case where the target logical channel to which the radio resource is allocated is a first-ranked logical channel, the radio resource is a minimum value among a radio resource size allocated to the target logical channel by a network, the buffer data amount of the target logical channel and the expected radio resource; or

in a case where the target logical channel to which the radio resource is allocated is not a first-ranked logical channel, the radio resource allocated to the target logical channel is a minimum value among a remaining radio resource size for the target logical channel, the buffer data amount of the target logical channel and the expected radio resource.

31. The device according to claim 30, further comprising: an updating unit, configured to update the remaining radio resource size and the buffer data amount of the target logical channel after the radio resource is allocated to each target logical channel.

32. The device according to any one of claims 27 to 31, further comprising: in a case where an updated remaining radio resource size is greater than 0 after radio resources for all target logical channels are determined, allocating updated remaining radio resources to the plurality of logical channels.

33. The device according to claim 32, wherein a manner for allocating the updated remaining radio resources to the plurality of logical channels comprises: equal allocation, allocation according to logical channel priority, or allocation according to an arranging order of the first parameters.

34. The device according to any one of claims 21 to 33, wherein the first parameter is represented by a curvature of a first curve.

35. The device according to claim 34, wherein the first curve increases as a current data rate of a logical channel increases, and the curvature of the first curve decreases as the current data rate of the logical channel increases.

36. The device according to claim 35, wherein the current data rate of the logical channel comprises a data rate counted for the logical channel up to a current slot.

37. The device according to any one of claims 34 to 36, wherein a constant used to determine the first curve comprises at least one of:

a first constant being used to represent a data rate set according to a QoS requirement of a logical channel;
a second constant being used to represent a scaling factor corresponding to logical channel priority; or
a third constant being an empirical value.

38. The device according to claim 37, wherein a correspondence between the logical channel priority and the scaling factor is configured by a network or is set by an empirical value.

39. The device according to claim 37 or 38, wherein a function formula of the first curve comprises:

$$F(x) = Z \times DR \times \left(\frac{x}{DR}\right)^{B};$$

wherein F(x) represents a function of the first curve, x represents a current data rate of a logical channel, DR represents the first constant, Z represents the second constant, and B represents the third constant.

40. The device according to claim 39, wherein a function formula of the curvature of the first curve comprises:

$$d\mathrm{F}(\mathrm{x}) = \mathrm{Z} \times \mathrm{B} \times \left(\frac{\mathrm{x}}{\mathrm{DR}}\right)^{\mathrm{B}-1};$$

wherein $d$F(x) represents a curvature function of the first curve.

41. A terminal device, comprising: a transceiver, a processor and a memory, wherein the memory is configured to store a computer program, the transceiver is configured to communicate with other devices, and the processor is configured to call the computer program stored in the memory and run the computer program, to enable the terminal device to perform the method according to any one of claims 1 to 20.

42. A chip, comprising: a processor configured to call a computer program from a memory and run the computer program, to enable a device equipped with the chip to perform the method according to any one of claims 1 to 20.

43. A computer-readable storage medium for storing a computer program which, when executed by a device, enables the device to perform the method according to any one of claims 1 to 20.

44. A computer program product, comprising computer program instructions, wherein the computer program instructions enable a computer to perform the method according to any one of claims 1 to 20.

45. A computer program, wherein the computer program enables a computer to perform the method according to any one of claims 1 to 20.

FIG. 1

Bj →

LCH1          LCH2          LCH3

SG

FIG. 2

300                                                                    ⌐S310

| First parameters corresponding to a plurality of logical channels are obtained based on data rates of the plurality of logical channels |

                                                                       ⌐S320

| Radio resources are allocated to the plurality of logical channels based on the first parameters corresponding to the plurality of logical channels |

FIG. 3

400 — S410

An expected radio resource for a target logical channel among the plurality of logical channels is determined based on a minimum value among the first parameters corresponding to the plurality of logical channels

— S420

A radio resource is allocated to the target logical channel based on the expected radio resource for the target logical channel

FIG. 4

500 — S510

The plurality of logical channels are arranged in a high-to-low order according to the first parameters corresponding to the plurality of logical channels, to obtain ranked logical channels; where logical channels from a first logical channel to a second-to-last logical channel among ranked logical channels are target logical channels

— S520

A radio resource is allocated to each target logical channel in sequence based on the minimum value among the first parameters corresponding to the plurality of logical channels

FIG. 5

600 — S610

The target logical channel is selected in sequence from the ranked logical channels

— S620

An expected data rate of the target logical channel is acquired, where a first parameter of the target logical channel at the expected data rate is comparable to the minimum value among the first parameters corresponding to the plurality of logical channels

— S630

The expected radio resource for the target logical channel is acquired based on the expected data rate of the target logical channel, such that a data rate of a target radio resource is increased to the expected data rate on the basis of a current data rate after a terminal device acquires the expected radio resource for the target logical channel

— S640

The radio resource allocated to the target logical channel is obtained based on the expected radio resource for the target logical channel, a buffer data amount of the target logical channel and allocatable radio resources

FIG. 6

<u>700</u>                                                                                      S710

| The remaining radio resource size and the buffer data amount of the target logical channel are updated after allocating the radio resource to each target logical channel |

                                                                                              S720

| in a case where an updated remaining radio resource size is greater than 0 after determining radio resources for all target logical channels, updated remaining radio resources are allocated to the plurality of logical channels |

FIG. 7

—————— Z=1, DR=40    – – – Z=2, DR=40    ——— Z=4, DR=60

FIG. 8A

Legend: ·········· Z=1, DR=40    — — —Z=2, DR=40    ———Z=4, DR=60

FIG. 8B

| Terminal device 900 | |
|---|---|
| Processing unit 901 | First allocation unit 902 |

FIG. 9

| Terminal device 1000 | |
|---|---|
| Processing unit 1001 | First allocation unit 1002 |
| Updating unit 1003 | Second allocation unit 1004 |

FIG. 10

Communication device 1100

Memory 1120

Processor 1110

Transceiver 1130

FIG. 11

Chip 1200

Input interface 1230

Processor 1210

Memory 1220

Output interface 1240

FIG. 12

Communication system 1300

Terminal device —1310

Network device —1320

FIG. 13

## INTERNATIONAL SEARCH REPORT

| International application No. |
|---|
| **PCT/CN2023/117853** |

**A. CLASSIFICATION OF SUBJECT MATTER**

H04W 72/50(2023.01)i

According to International Patent Classification (IPC) or to both national classification and IPC

**B. FIELDS SEARCHED**

Minimum documentation searched (classification system followed by classification symbols)

IPC: H04W72/-

Documentation searched other than minimum documentation to the extent that such documents are included in the fields searched

Electronic data base consulted during the international search (name of data base and, where practicable, search terms used)

CNABS; CNTXT; ENTXTC; CJFD; CNKI: 逻辑信道, 速率, 资源, 分配, 优先级, QoS; VEN; ENTXT; USTXT; EPTXT; WOTXT; 3GPP; 百度学术; BAIDU SCHOLAR; IEEE: logical channel, LCH, rate, resource, allocate, priority, prioritization, QoS

**C. DOCUMENTS CONSIDERED TO BE RELEVANT**

| Category* | Citation of document, with indication, where appropriate, of the relevant passages | Relevant to claim No. |
|---|---|---|
| X | US 2011243076 A1 (QUALCOMM INC.) 06 October 2011 (2011-10-06) claims 1-30, and description, paragraphs 9, 26, 34, 42, and 51 | 1-18, 21-38, 41-45 |
| X | CN 108012336 A (MEDIATEK SINGAPORE PTE. LTD.) 08 May 2018 (2018-05-08) claims 1-22, and description, paragraph 28 | 1, 21, 41-45 |
| A | CN 114223296 A (GUANGDONG OPPO MOBILE TELECOMMUNICATIONS CORP., LTD.) 22 March 2022 (2022-03-22) entire document | 1-45 |
| A | CN 103650622 A (BROADCOM CORP.) 19 March 2014 (2014-03-19) entire document | 1-45 |
| A | CN 111294758 A (BEIJING SPREADTRUM HI-TECH COMMUNICATIONS TECHNOLOGY CO., LTD.) 16 June 2020 (2020-06-16) entire document | 1-45 |
| A | US 2011182251 A1 (QUALCOMM INC.) 28 July 2011 (2011-07-28) entire document | 1-45 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 April 2024** | **29 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/117853** |

**C.    DOCUMENTS CONSIDERED TO BE RELEVANT**

| Category* | Citation of document, with indication, where appropriate, of the relevant passages | Relevant to claim No. |
| --- | --- | --- |
| A | ERICSSON. "Introduction of RAN-assisted Codec Bitrate Adaptation" *3GPP TSG-RAN2 Meeting #97, R2-1702156*, 20 February 2017 (2017-02-20), entire document | 1-45 |

Form PCT/ISA/210 (second sheet) (July 2022)

**INTERNATIONAL SEARCH REPORT**
**Information on patent family members**

International application No.

**PCT/CN2023/117853**

| Patent document cited in search report | | | Publication date (day/month/year) | Patent family member(s) | | | Publication date (day/month/year) |
|---|---|---|---|---|---|---|---|
| US | 2011243076 | A1 | 06 October 2011 | WO | 2011044527 | A1 | 14 April 2011 |
| | | | | TW | 201138524 | A | 01 November 2011 |
| | | | | US | 8594031 | B2 | 26 November 2013 |
| CN | 108012336 | A | 08 May 2018 | TW | 201816623 | A | 01 May 2018 |
| | | | | US | 2018124634 | A1 | 03 May 2018 |
| CN | 114223296 | A | 22 March 2022 | WO | 2021081908 | A1 | 06 May 2021 |
| CN | 103650622 | A | 19 March 2014 | WO | 2012160510 | A1 | 29 November 2012 |
| | | | | EP | 2716122 | A1 | 09 April 2014 |
| | | | | GB | 2491139 | A | 28 November 2012 |
| | | | | US | 2012300712 | A1 | 29 November 2012 |
| | | | | GB | 2491139 | B | 19 February 2014 |
| | | | | US | 8780835 | B2 | 15 July 2014 |
| CN | 111294758 | A | 16 June 2020 | JP | 2022541928 | A | 28 September 2022 |
| | | | | EP | 4007318 | A1 | 01 June 2022 |
| | | | | EP | 4007318 | A4 | 17 August 2022 |
| | | | | WO | 2021012739 | A1 | 28 January 2021 |
| | | | | US | 2022272713 | A1 | 25 August 2022 |
| | | | | KR | 20220049002 | A | 20 April 2022 |
| | | | | CN | 111294758 | B | 01 October 2021 |
| US | 2011182251 | A1 | 28 July 2011 | WO | 2011014544 | A1 | 03 February 2011 |
| | | | | WO | 2011014544 | A9 | 24 November 2011 |
| | | | | TW | 201129196 | A | 16 August 2011 |

Form PCT/ISA/210 (patent family annex) (July 2022)